# EUROPÄISCHE PATENTSCHRIFT

(11) **EP 2 753 857 B1**
(45) Veröffentlichungstag und Bekanntmachung des Hinweises auf die Patenterteilung: **10.02.2016**
(21) Anmeldenummer: 12753513.6
(22) Anmeldetag: 04.09.2012
(51) Int. Cl.: F16L 23/00, F16L 41/00, F16L 41/14, G01L 19/00

(54) **AUFNAHMEVORRICHTUNG FÜR SENSOREN BEI HOCHDRUCKANWENDUNGEN**
ACCOMMODATING DEVICE FOR SENSORS IN HIGH-PRESSURE APPLICATIONS
DISPOSITIF SERVANT À LOGER DES CAPTEURS DESTINÉS À DES APPLICATIONS HAUTE PRESSION

(30) Priorität: 07.09.2011 EP 11180440
(43) Veröffentlichungstag der Anmeldung: 16.07.2014
(73) Patentinhaber: BASF SE, 67056 Ludwigshafen (DE)
(72) Erfinder: REBER, Ulrich, 67112 Mutterstadt (DE); HAHN, Harald, 67269 Grünstadt (DE); RAUE, Frank, 67059 Ludwigshafen (DE); MÜLLER, Thomas, 68647 Biblis (DE)
(86) Internationale Anmeldenummer: PCT/EP2012/067225
(87) Internationale Veröffentlichungsnummer: WO 2013/034552

(56) Entgegenhaltungen:
- EP-A2- 0 344 576
- WO-A2-2005/054734
- CH-A5- 696 501
- DE-A1- 3 821 826
- DE-B- 1 273 282
- DE-C1- 19 751 138
- US-A- 2 679 411

## Beschreibung

Die vorliegende Erfindung betrifft eine Vorrichtung zum Anschluss eines Sensors, der einen konischen Dichtkegel sowie ein Außengewinde vor dem Dichtkegel aufweist, an ein Hochdruckbauteil, umfassend eine Bohrung und eine Anschlussleitung in dem Hochdruckbauteil, wobei die Bohrung ein Innengewinde aufweist und die Stirnfläche der Bohrung über einen konischen Dichtkegel mit der Anschlussleitung verbunden ist, weiterhin umfassend eine hohle Druckschraube mit einem Außengewinde, das zum Eingriff in das Innengewinde der Bohrung ausgestaltet ist. Weiterhin betrifft die Erfindung die Verwendung der Vorrichtung in einem chemischen Herstellungsprozess unter hohem Druck.

Gattungsgemäße Vorrichtungen für den Einsatz im Hochdruckbereich sind seit geraumer Zeit bekannt, beispielsweise zum Anschluss eines Hochdruckrohres an ein Hochdruckbauteil oder zur Verbindung von Hochdruckleitungen. So wird in der US-Patentschrift 2,679,411 eine Vorrichtung offenbart, mit der ein Hochdruckrohr, dessen Ende als konischer Dichtkegel ausgestaltet ist, dichtend mit einem Hochdruckbauteil verbunden werden kann, wobei das Hochdruckbauteil über eine Bohrung mit einem Innengewinde und einem konischen Dichtkegel in der Stirnfläche der Bohrung verfügt. Das Hochdruckrohr weist ein Außengewinde auf, auf das eine Druckhülse aufgeschraubt ist. Eine hohle Druckschraube mit einem Außengewinde und einer umlaufenden Schulter auf ihrer Innenfläche wird über das Hochdruckrohr geschoben und in das Innengewinde der Bohrung geschraubt. Die dichtende Verbindung kommt dadurch zustande, dass die Schulter der Druckschraube die Druckhülse in Richtung der Stirnseite der Bohrung drückt, bis die Konusflächen der Dichtkegel von Hochdruckrohr und Hochdruckbauteil hinreichend aufeinander gepresst sind.

Eine ähnliche Vorrichtung zum Anschluss eines Hochdruckrohres an ein Hochdruckbauteil wird in der deutschen Auslegeschrift DE 1 273 282 A1 beschrieben. Auch dort wird die dichtende Verbindung durch das Zusammenwirken einer hohlen Druckschraube (dort Stopfbüchsenmutter genannt) mit einer Druckhülse (dort Hülse bzw. Manschette genannt) bewirkt. Das gleiche Prinzip wird in der Patentschrift DE 197 51 138 C1 angewandt, um dichtende Verbindungen bei einem Winkelstück zur Umlenkung eines Hochdruckrohres herzustellen.

Dokument DE 38 21 826 A1 offenbart eine Anordnung zum Verbinden einer Abzweigleitung in einem Hochdruck-Kraftstoffverteiler, in dem jede Abzweigleitung mit einer Hauptleitung zum Fördern von Kraftstoff unter Hochdruck durch eine von einer Anzahl Durchgangsbohrungen verbunden ist, die in der Außenwandung der Hauptleitung derart angeordnet sind, dass die Durchgangsbohrungen beabstandet zueinander in der Längsrichtung der Hauptleitung angeordnet und mit einem Strömungsdurchgang verbunden sind, der sich im Innern der Hauptleitung befindet.

Sämtlichen bekannten gattungsgemäßen Vorrichtungen ist gemein, dass zum Erreichen einer für die Abdichtung hinreichenden Anpresskraft eine hohle Druckschraube mit einer Druckhülse zusammenwirkt, wobei die Druckhülse auf dem Ende des Hochdruckrohres befestigt ist, und die Druckschraube als Überwurfmutter in eine Bohrung des Hochdruckbauteils geschraubt wird.

Neben der Verbindung von Hochdruckrohren mit anderen Hochdruckbauteilen wird diese Art von Vorrichtung auch eingesetzt, um stab- oder rohrförmige Sensoren an Hochdruckbauteilen dichtend zu befestigen, beispielsweise an Linsenanschlüssen zwischen zwei Hochdruckleitungen. Aufgrund konstruktiver Gegebenheiten ist bei derartigen Anwendungen häufig der Bauraum begrenzt, in dem Sensor und Druckschraube untergebracht werden müssen. Die oben erläuterte etablierte Verbindungstechnik stößt dabei an Grenzen im Hinblick auf die maximal zulässigen Außendurchmesser von Sensor und Druckschraube. Bei vorgegebenem maximalem Außendurchmesser der Druckschraube ergibt sich aufgrund von Festigkeitsberechnungen in Abhängigkeit der verwendeten Materialien und des Druckbereichs im Hochdruckbauteil ein maximal zulässiger Außendurchmesser für den Sensor. Sensoren mit größerem Außendurchmesser, die für manche Anwendungen wünschenswert sind, können mit der bislang bekannten Verbindungstechnik in einem solchen Fall nicht eingesetzt werden.

Es stellte sich die Aufgabe, eine Vorrichtung zum Anschluss eines Sensors an ein Hochdruckbauteil bereitzustellen, die den Einsatzbereich von Sensoren in Hochdruckanwendungen erweitert, wobei die guten Dichteigenschaften bekannter Techniken erhalten bleiben sollen.

Diese Aufgabe wird erfindungsgemäß gelöst durch eine Vorrichtung gemäß Anspruch 1. Vorteilhafte Ausgestaltungen der Erfindung sind in den abhängigen Ansprüchen 2 bis 4 angegeben. Die Verwendung von erfindungsgemäßen Vorrichtungen in einem chemischen Herstellungsprozess unter Hochdruck ist Gegenstand der Ansprüche 5 bis 7.

Die erfindungsgemäße Vorrichtung ist geeignet, einen Sensor, der einen konischen Dichtkegel sowie ein Außengewinde vor dem Dichtkegel aufweist, dichtend an ein Hochdruckbauteil anzuschließen. Der Dichtkegel kann ein sich verjüngendes Ende des Sensors bilden, ähnlich einem Hochdruckrohr, wie es aus dem oben zitierten Stand der Technik bekannt ist. Der Dichtkegel kann jedoch auch eine konische Verjüngung als Übergang zwischen zwei Abschnitten des Sensors mit unterschiedlichen Durchmessern bilden. Das Außengewinde ist in diesem Fall an dem Abschnitt mit dem größeren Durchmesser angebracht. Ein derartiger Sensor wird weiter unten anhand eines Beispiels näher erläutert.

Die Erfindung lässt sich vorteilhaft auf unterschiedliche Arten von Hochdruckbauteilen anwenden. Unter einem Hochdruckbauteil wird im Folgenden ein Bauteil verstanden, bei dem im Inneren Drücke von mehr als 100 bar herrschen können. Besonders vorteilhaft lässt sich die Erfindung anwenden auf Hochdruckbauteile, bei denen im Betrieb im Inneren ein Druck von 325 bar bis 3600 bar herrscht. Beispiele sind Sammler und Verteiler von Hochdruckleitungen oder Linsenanschlüsse zwischen Hochdruckleitungen.

Die erfindungsgemäße Vorrichtung umfasst eine Bohrung und eine Anschlussleitung in dem Hochdruckbauteil, wobei die Bohrung ein Innengewinde aufweist und die Stirnfläche der Bohrung über einen konischen Dichtkegel mit der Anschlussleitung verbunden ist. Im angeschlossenen Zustand steht der Sensor mit der Anschlussleitung in Verbindung, um über die Anschlussleitung eine Messgröße in dem Hochdruckbauteil zu erfassen, beispielsweise Druck oder Temperatur.

Weiterhin umfasst die Vorrichtung eine hohle Druckschraube mit einem Außengewinde, das zum Eingriff in das Innengewinde der Bohrung ausgestaltet ist. Erfindungsgemäß weist die Druckschraube zudem ein Innengewinde auf, das zum Eingriff in das Außengewinde des Sensors ausgestaltet ist, wobei Außengewinde und Innengewinde der Druckschraube gegenläufig sind, sodass durch Einschrauben der Druckschraube in die Bohrung des Hochdruckbauteils die Dichtkegel von Sensor und Stirnfläche der Bohrung dichtend aufeinander pressbar sind.

Die Gegenläufigkeit von Außen- und Innengewinde der Druckschraube ermöglicht es, den Dichtkegel des Sensors ausschließlich axial auf den Dichtkegel in der Stirnfläche der Bohrung zu pressen. Bei einer Gleichläufigkeit müsste der Sensor gegenüber der Bohrung im Hochdruckbauteil verdreht werden, um einen ausreichenden Anpressdruck zu erzeugen, was eine Beschädigung der Dichtfläche zwischen den beiden Dichtkegeln zur Folge haben könnte. In einer bevorzugten Ausführung der Erfindung wird zunächst die Druckschraube auf das Außengewinde des Sensors geschraubt. Anschließend wird die Druckschraube in die Bohrung geschraubt, während der Sensor gegen ein Verdrehen gesichert wird, beispielsweise indem der Sensor an einem geeignet ausgebildeten Eingriff mit einem Schraubenschlüssel verdrehsicher gehalten wird.

In einer bevorzugten Ausgestaltung der Erfindung sind das Außengewinde der Druckschraube als Rechtsgewinde und das Innengewinde der Druckschraube als Linksgewinde ausgestaltet.

Der Konuswinkel des Dichtkegels des Sensors beträgt erfindungsgemäß von 75° bis 81°, insbesondere 78°. Der Konuswinkel des Dichtkegels in der Stirnfläche der Bohrung ist vorzugsweise um 1° bis 3°, insbesondere um 2° größer als der Konuswinkel des Dichtkegels des Sensors. Die Wahl der Konuswinkel in dem bevorzugten Bereich bewirkt, dass der Anteil der Radialkräfte auf den Sensor geringer ist als bei bekannten Lösungen mit kleineren Konuswinkeln. Insbesondere bei Sensoren, die empfindlich auf äußere Druckeinwirkungen reagieren, lässt sich durch diese konstruktive Maßnahme die Messgenauigkeit verbessern.

Die erfindungsgemäße Vorrichtung lässt sich vorteilhaft einsetzen bei chemischen Herstellungsprozessen unter hohem Druck, insbesondere einem Druck in der Anschlussleitung von 325 bis 3600 bar. Besonders vorteilhaft lässt sich die erfindungsgemäße Vorrichtung einsetzen bei Hochdruck-Polymerisationen in Rohrreaktoren, insbesondere zur Herstellung von Polyethylen niedriger Dichte ("low density polyethylene", LDPE). Bei derartigen Prozessen ist es üblich, Sensoren für die Aufnahme von Druck oder Temperatur an sogenannten Messlinsen anzubringen. Bei der Messlinse handelt es sich um ein scheibenförmiges Bauteil, das als Flanschverbindung zwischen die Enden zweier Hochdruckleitungen verschraubt wird. Die Messlinse ist mit einer oder mehreren Bohrungen zur Aufnahme von Sensoren versehen.

Aufgrund konstruktiver Gegebenheiten sind die Stärke der Messline und damit der Abstand zwischen den Enden der Rohrleitungen begrenzt. Aus Festigkeitsanforderungen und dem konkreten Druckbereich ergibt sich ein maximal zulässiger Außendurchmesser der Bohrung und somit auch der Druckschraube. Bei dem herkömmlichen Verfahren des Anschlusses von Sensoren an die Messlinse als Hochdruckbauteil sind zwei Bauteile, nämlich Druckschraube und Druckhülse, erforderlich, die beide eine Mindestmaterialstärke aufweisen müssen. Die erfindungsgemäße Vorrichtung hat den Vorteil, dass sie mit nur einer Druckschraube auskommt, dabei die Anforderungen an die Abdichtung zuverlässig erfüllt und eine kompaktere Bauart des Anschlusses ermöglicht. Dadurch ist es nunmehr möglich, auch Sensoren mit einem größeren Außendurchmesser als bisher an Hochdruckbauteile anzuschließen.

Bei Ausführungsformen des Sensors, bei denen der Dichtkegel eine konische Verjüngung als Übergang zwischen zwei Abschnitten des Sensors mit unterschiedlichen Durchmessern bildet, erlaubt ein größerer Außendurchmesser des Sensors auch einen größeren Durchmesser des Abschnitts nach der konischen Verjüngung. Während im Stand der Technik für entsprechende Sensoren in Linsenanschlüssen von Hochdruckleitungen bislang Durchmesser von ca. 5 mm bekannt waren, ermöglicht die Erfindung nun den Einsatz von Sensoren mit einem entsprechenden Durchmesser von 10 mm und mehr. Das Spektrum der einsetzbaren Sensoren wird somit durch die Erfindung deutlich erweitert.

Bei vorgegebenem Außendurchmesser des Sensors kann bei der erfindungsgemäßen Vorrichtung die Bohrung in dem Hochdruckbauteil im Durchmesser geringer ausgeführt werden, was im Hinblick auf Festigkeitsbetrachtungen vorteilhaft ist.

Anhand der Zeichnungen wird im Folgenden die Erfindung weiter erläutert, wobei die Zeichnungen als Prinzipdarstellungen zu verstehen sind. Sie stellen keine Beschränkung der Erfindung, beispielsweise im Hinblick auf konkrete Abmessungen oder Ausgestaltungsvarianten von Bauteilen dar. Es zeigen:
- Fig. 1:: Beispiel eines Sensors
- Fig. 2:: Ausschnitt eines Querschnitts durch ein Hochdruckbauteil
- Fig. 3:: Ausführungsform einer erfindungsgemäßen Druckschraube
- Fig. 4:: Beispiel des Anschlusses von drei Sensoren an einem Linsenanschluss einer Hochdruckleitung

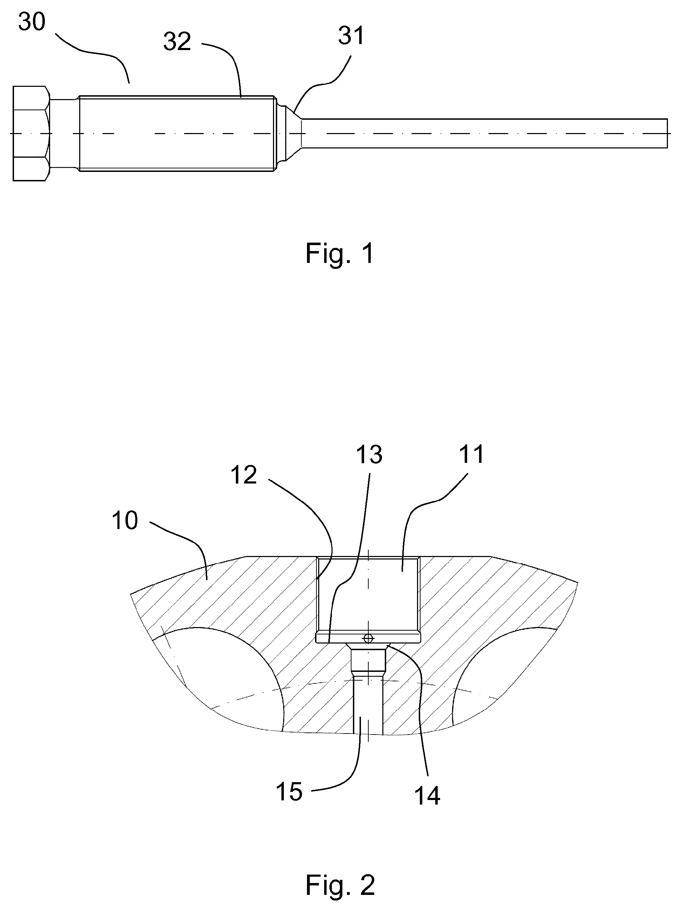

In Fig. 1 ist ein Beispiel eines stabförmigen Sensors 30 zur Druckmessung dargestellt. Der Sensor 30 umfasst zwei zylindrische Abschnitte mit unterschiedlichen Durchmessern. Die beiden Abschnitte gehen über eine konische Verjüngung ineinander über, die auch als Dichtkegel 31 bezeichnet wird. Vor dem Dichtkegel 31 an dem Abschnitt mit dem größeren Durchmesser ist ein Außengewinde 32 vorhanden. Weitere Bauteile des Sensors wie Druckmittler und elektrischer Anschluss sind in Fig. 1 nicht dargestellt.

Fig. 2 zeigt beispielhaft einen Ausschnitt eines Querschnitts durch ein Hochdruckbauteil 10. Von einer Außenfläche des Hochdruckbauteils 10 erstreckt sich eine Bohrung 11 in Richtung des Bauteilinneren. Die Bohrung 11 ist mit einem Innengewinde 12 versehen. Von der Stirnfläche 13 der Bohrung 11 aus führt eine Anschlussleitung 15 weiter ins Innere des Hochdruckbauteils 10. Der Übergang von der Stirnfläche 13 der Bohrung in die Anschlussleitung 15 ist konusförmig als Dichtkegel 14 ausgestaltet.

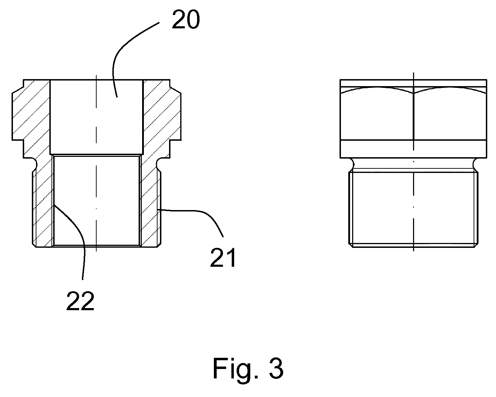

In Fig. 3 ist eine bevorzugte Ausgestaltung einer erfindungsgemäßen hohlen Druckschraube 20 dargestellt, rechts als Ansicht und links als Längsschnitt durch die Zylinderachse. Der äußere obere Teil der Druckschraube ist als Außensechskant ausgebildet, während der untere Teil der Außenfläche mit einem Außengewinde 21 versehen ist. Der untere Teil der Innenfläche ist mit einem Innengewinde 22 versehen, das gegenläufig zu dem Außengewinde 21 ist. Der obere Teil der Innenfläche ist in diesem Beispiel als glatte Zylinderfläche ausgestaltet. Die Erfindung umfasst jedoch auch Ausführungsformen, bei der die gesamte Innenfläche mit einem Innengewinde 22 versehen ist.

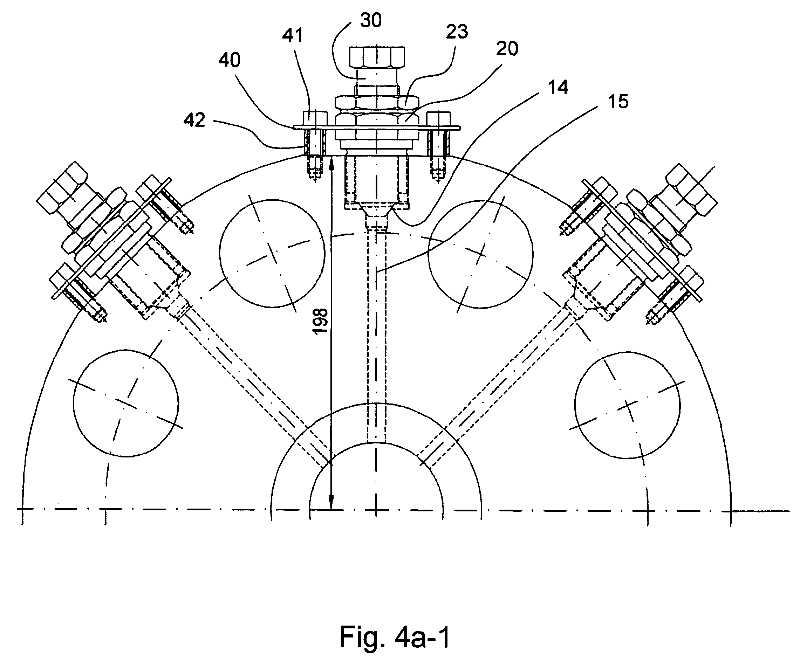

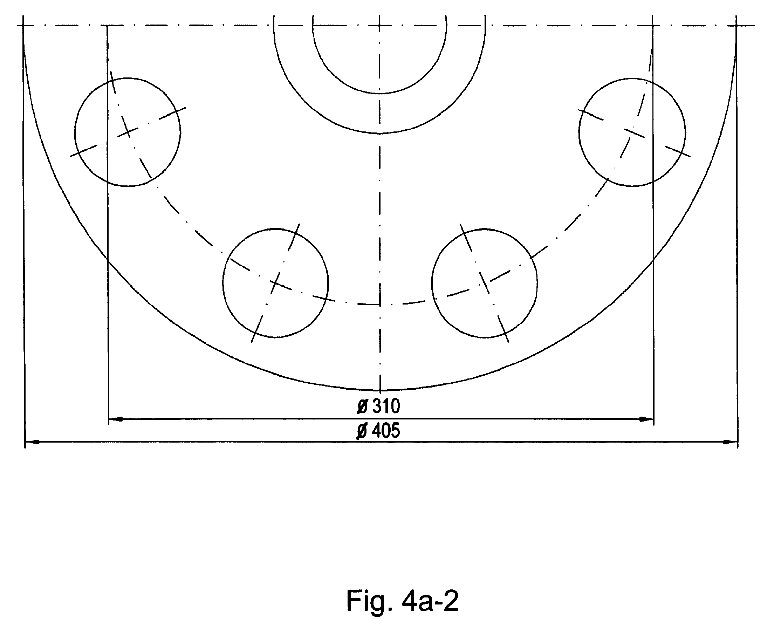

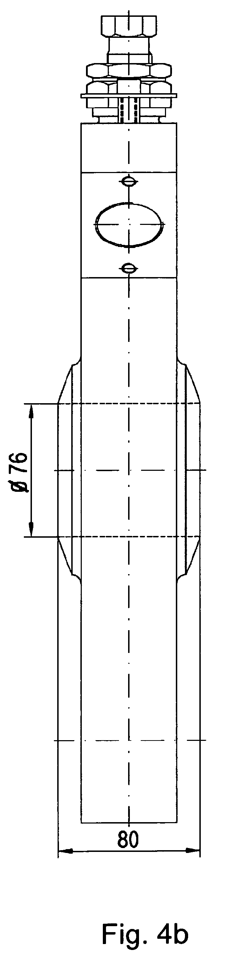

Fig. 4 zeigt als Anwendungsbeispiel den Anschluss von drei Sensoren 30 an einen Linsenanschluss einer Hochdruckleitung als Hochdruckbauteil. Auf der linken Seite von Fig. 4 ist eine Vorderansicht des Linsenanschlusses dargestellt, auf der rechten Seite eine Seitenansicht, wobei dort ein Sensor nicht abgebildet ist. Die Maße sind in der Einheit Millimeter angegeben. Der Linsenanschluss dient auch als Dichtelement zwischen zwei Hochdruckleitungen, zur Durchführung der Flanschschrauben sind über den Umfang verteilt acht Löcher vorgesehen. Unter Betriebsbedingungen strömt durch die Öffnung im Zentrum des Linsenanschlusses ein Fluid unter hohem Druck. Das Bauteil ist mit drei identisch ausgeführten erfindungsgemäßen Vorrichtungen zum Anschluss von Sensoren ausgestattet. Die Sensoren 30 entsprechen dem in Fig. 1 dargestellten Typus.

Von der Außenseite des Linsenanschluss erstrecken sich jeweils Bohrungen in Richtung des Zentrums. Die Bohrungen sind mit einem Innengewinde versehen. Die Stirnseiten der Bohrungen sind über Dichtkegel 14 mit Anschlussleitungen 15 verbunden, die bis zur Öffnung im Zentrum des Linsenschlusses führen. Jeweils ein Sensor 30 ist mit Hilfe einer Druckschraube 20 dicht mit dem Hochdruckbauteil verbunden. Um ein unbeabsichtigtes Lösen der Druckschrauben zu verhindern, sind Sicherungsbleche 40 um die Druckschrauben 20 angebracht und über Distanzhülsen 42 mit Schrauben 41 am Hochdruckbauteil befestigt. Die Sicherungsbleche verfügen über eine Aussparung, deren Formgebung der Außenkontur der Druckschrauben entspricht, im Beispiel eine Sechskant-Form. Zur Sicherung der Sensoren 30 gegen ein unbeabsichtigtes Lösen ist eine Kontermutter 23 aufgeschraubt.

## Patentansprüche

1. Vorrichtung zum Anschluss eines Sensors (30), der einen konischen Dichtkegel (31) sowie ein Außengewinde (32) vor dem Dichtkegel (31) aufweist. an ein Hochdruckbauteil (10), umfassend eine Bohrung (11) und eine Anschlussleitung (15) in dem Hochdruckbauteil (10), wobei die Bohrung (11) ein Innengewinde (12) aufweist und die Stirnfläche (13) der Bohrung über einen konischen Dichtkegel (14) mit der Anschlussleitung (15) verbunden ist, weiterhin umfassend eine hohle Druckschraube (20) mit einem Außengewinde (21), das zum Eingriff in das Innengewinde (12) der Bohrung (11) ausgestaltet ist, wobei die Druckschraube (20) ein Innengewinde (22) aufweist, das zum Eingriff in das Außengewinde (32) des Sensors (30) ausgestaltet ist, wobei Außengewinde (21) und Innengewinde (22) der Druckschraube (20) gegenläufig sind, sodass durch Einschrauben der Druckschraube in die Bohrung des Hochdruckbauteils die Dichtkegel (31, 14) von Sensor und Stirnflache der Bohrung dichtend aufeinander pressbar sind, und wobei der Konuswinkel des Dichtkegels (31) des Sensors (30) von 75° bis 81° beträgt.

2. Vorrichtung gemäß Anspruch 1, wobei das Außengewinde (21) der Druckschraube (20) als Rechtsgewinde und das Innengewinde (22) der Druckschraube als Linksgewinde ausgestaltet sind.

3. Vorrichtung gemäß Anspruch 1 oder 2, wobei der Konuswinkel des Dichtkegels (14) in der Stirnfläche (13) der Bohrung (11) um 1° bis 3°, insbesondere um 2° größer ist als der Konuswinkel des Dichtkegels (31) des Sensors (30).

4. Vorrichtung gemäß einem der Ansprüche 1 bis 3, wobei es sich bei dem Hochdruckbauteil (10) um einen Sammler, Verteiler oder Linsenanschluss einer Hochdruckleitung handelt.

5. Verwendung der Vorrichtung gemäß mindestens einem der Ansprüche 1 bis 4 in einem chemischen Herstellungsprozess, in dem in der Anschlussleitung (15) ein Druck von 325 bis 3600 bar herrscht.

6. Verwendung der Vorrichtung gemäß mindestens einem der Ansprüche 1 bis 4 in einem chemischen Herstellungsprozess, wobei es sich bei dem Sensor (30) um einen Messaufnehmer für Druck oder Temperatur handelt.

7. Verwendung der Vorrichtung gemäß Anspruch 5 oder 6, wobei es sich bei dem Herstellungsprozess um eine Hochdruck-Polymerisation handelt, insbesondere zur Herstellung von Polymethylen niedriger Dichte (LDPE).

## Claims

1. A device for connecting a sensor (30), which has a conical sealing cone (31) and an external screwthread (32) in front of the sealing cone (31), to a high-pressure component (10), comprising a bore (11) and a connection line (15) in the high-pressure component (10), wherein the bore (11) has an internal screwthread (12) and the end face (13) of the bore is joined to the connection line (15) via a conical sealing cone (14), further comprising a hollow pressure screw (20) with an external screwthread (21) which is designed to engage in the internal screwthread (12) of the bore (11), wherein the pressure screw (20) has an internal screwthread (22) which is designed so as to engage in the external screwthread (32) of the sensor (30), wherein the external screwthread (21) and internal screwthread (22) of the pressure screw (20) run in opposite directions, so that the sensor sealing cone (31, 14) and the end face of the bore can be pressed against each other in sealing fashion by screwing the pressure screw into the bore of the high-pressure component, and wherein the cone angle of the sealing cone (31) of the sensor (30) is 75° to 81°.

2. The device according to claim 1, wherein the external screwthread (21) of the pressure screw (20) is designed as a right-hand thread and the internal screwthread (22) is designed as a lefthand thread.

3. The device according to claim 1 or 2, wherein the cone angle of the sealing cone (14) in the end face (13) of the bore (11) is 1° to 3°, in particular 2°, larger than the cone angle of the sealing cone (31) of the sensor (30).

4. The device according to claim 1 or 3, wherein the high-pressure component (10) is a header, distributor or lens connections of a high-pressure line.

5. The use of the device according to at least one of claims 1 to 4 in a chemical production process, in which a pressure of 325 to 3600 bar prevails in the connection line (15).

6. The use of the device according to at least one of claims 1 to 4 in a chemical production process, wherein the sensor (30) is a detector for pressure or temperature.

7. The use of the device according to claim 5 or 6, wherein the production process is a high-pressure polymerization reaction, in particular for producing low-density polyethylene (LDPE).

## Revendications

1. Dispositif pour le raccordement d'un capteur (30), qui présente un cône d'étanchéité conique (31) ainsi qu'un filetage extérieur (32) avant le cône d'étanchéité (31), à un composant haute pression (10), comprenant un perçage (11) et une ligne de raccordement (15) dans le composant haute pression (10), le perçage (11) présentant un filetage intérieur (12) et la surface frontale (13) du perçage étant connectée par le biais d'un cône d'étanchéité conique (14) à la ligne de raccordement (15), et comprenant en outre une vis de serrage creuse (20) avec un filetage extérieur (21) qui est configuré pour s'engager dans le filetage intérieur (12) du perçage (11), la vis de serrage (20) présentant un filetage intérieur (22) qui est configuré pour s'engager dans le filetage extérieur (32) du capteur (30), le filetage extérieur (21) et le filetage intérieur (22) de la vis de serrage (20) étant en sens inverse, de sorte que par vissage de la vis de serrage dans le perçage du composant haute pression, le cône d'étanchéité (31, 14) du capteur et la surface frontale du perçage puissent être pressés de manière hermétique l'un contre l'autre, et l'angle de conicité du cône d'étanchéité (31) du capteur (30) étant compris entre 75° et 81°.

2. Dispositif selon la revendication 1, dans lequel le filetage extérieur (21) de la vis de serrage (20) est configuré en tant que filetage à droite et le filetage intérieur (22) de la vis de serrage est configuré en tant que filetage à gauche.

3. Dispositif selon la revendication 1 ou 2, dans lequel l'angle de conicité du cône d'étanchéité (14) dans la surface frontale (13) du perçage (11) est supérieur de 1° à 3°, en particulier de 2°, à l'angle de conicité du cône d'étanchéité (31) du capteur (30).

4. Dispositif selon l'une quelconque des revendications 1 à 3, dans lequel le composant haute pression (10) est un collecteur, un distributeur ou un raccord de lentille d'une ligne haute pression.

5. Utilisation du dispositif selon au moins l'une quelconque des revendications 1 à 4, dans un processus de fabrication chimique dans lequel une pression de 325 à 3600 bar règne dans la ligne de raccordement (15).

6. Utilisation du dispositif selon au moins l'une quelconque des revendications 1 à 4, dans un processus de fabrication chimique, dans laquelle le capteur (30) est un capteur de mesure de pression ou de température.

7. Utilisation du dispositif selon la revendication 5 ou 6, le processus de fabrication étant une polymérisation haute pression, en particulier pour la fabrication de polyéthylène basse densité (LDPE).
